(19) Europäisches Patentamt
European Patent Office
Office européen des brevets

(11) EP 4 597 157 A1

(12) EUROPEAN PATENT APPLICATION

(43) Date of publication:
06.08.2025 Bulletin 2025/32

(21) Application number: 25152291.8

(22) Date of filing: 16.01.2025

(51) International Patent Classification (IPC):
G01S 7/48 (2006.01)          G01S 17/89 (2020.01)
G01S 17/931 (2020.01)        G06T 3/00 (2024.01)
G06T 7/73 (2017.01)          G06T 7/00 (2017.01)
G06T 17/05 (2011.01)

(52) Cooperative Patent Classification (CPC):
G01S 7/4808; G01S 17/89; G01S 17/931;
G06T 7/74; G06T 7/97; G06T 17/05

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.01.2024  JP 2024011626

(71) Applicant: Nachi-Fujikoshi Corp.
Tokyo 105-0021 (JP)

(72) Inventor: IMAOKA, Makoto
Toyama, 9308511 (JP)

(74) Representative: Plougmann Vingtoft a/s
Strandvejen 70
2900 Hellerup (DK)

(54) ENVIRONMENT MAP GENERATION PROGRAM AND THREE-DIMENSIONAL SENSOR CONTROL DEVICE

(57) The purpose of the present invention is to provide an environment map generation program that can generate an environment map accurately and speedily even in an environment with a moving body.

An environment map generation program (10) is a program that causes a computer to function as a data acquisition part (21) that acquires orthogonal coordinates point cloud data of a plurality of photographing frames photographed by a three-dimensional sensor with a fixed photographing range, a first coordinates conversion part (23) that converts the orthogonal coordinates point cloud data into polar coordinates point cloud data in accordance with a first formula for conversion from orthogonal coordinates to polar coordinates, a farthest point searching part (24) that searches each subregion of the photographing range for, as farthest point data, the polar coordinates point cloud data that is farthest in distance from the three-dimensional sensor, a second coordinates conversion part (25) that converts the farthest point data into the orthogonal coordinates point cloud data in accordance with a second formula for conversion from the polar coordinates to the orthogonal coordinates, and an environment map output part (26) that outputs environment mapping data of the photographing range based on the orthogonal coordinates point cloud data obtained in the second coordinates conversion part (25).

FIG. 2

Three-dimensional Sensor Control Device 1
（Environment Map Generation Program 10）

- Data Acquisition Part — 21
- Data Synthesizing Part — 22
- First Coordinates Conversion Part — 23
- Farthest Point Searching Part — 24
- Second Coordinates Conversion Part — 25
- Environment Map Output Part — 26

EP 4 597 157 A1

**Description**

TECHNICAL FIELD

The present invention relates to an environment map generation program for generating an environment map.

BACKGROUND OF THE INVENTION

In technologies such as automated vehicle operation, autonomous mobile robots (AGV: automatic guided vehicle), collaborative robots, meal serving robots, robot cleaners, drone controls, and augmented reality (AR), environment maps of surroundings are requisites. A method called "simultaneous localization and mapping (SLAM)" has been used conventionally as a technique for environment mapping. SLAM can carry out self-localization and environment mapping under certain conditions. For example, Patent Document 1 describes collection of space data etc. by LiDAR SLAM, which uses a light detection and ranging (LiDAR) sensor. In general, a three-dimensional sensor such as the LiDAR sensor acquires point cloud data that can be represented in three-dimensional coordinates (x, y, z).

RELATED APPLICATIONS

[Patent Document 1] Japanese Unexamined Patent Application Publication No. 2022-134119 (JP-A-2022-134119)

SUMMARY OF THE INVENTION

(PROBLEMS TO BE SOLVED BY THE INVENTION)

Unfortunately, the conventional SLAM has three issues. Firstly, the point cloud data is less dense than resolution of common still images and matching between point cloud data (i.e., point-cloud registration) may not be performed sufficiently. For example, in a location such as a plain field that lacks structural characteristics, point-cloud registration cannot be performed sufficiently and thus environment maps cannot be generated successfully. Secondly, point-cloud registration applies high processing load, and thus a high-spec computer is to be provided or a way to speed up the process is to be devised. Thirdly, SLAM assumes that the environment is static, so, in an environment where a moving body such as a human exists, SLAM may recognize the moving body as a landmark and may generate an incorrect environment map.

The present invention was made in view of such problems. It is an object of the present invention to provide an environment map generation program and a three-dimensional sensor control device that can generate an environment map accurately and speedily even in an environment with a moving body.

(MEANS FOR SOLVING PROBLEMS)

To achieve the above object, a first aspect of the present invention is an environment map generation program that causes a computer to function as a data acquisition part that acquires orthogonal coordinates point cloud data of a plurality of photographing frames photographed by a three-dimensional sensor with a fixed photographing range, a first coordinates conversion part that converts the orthogonal coordinates point cloud data into polar coordinates point cloud data in accordance with a first formula for conversion from orthogonal coordinates to polar coordinates, a farthest point searching part that searches each sub-region of the photographing range for, as farthest point data, the polar coordinates point cloud data that is farthest in distance from the three-dimensional sensor, a second coordinates conversion part that converts the farthest point data into the orthogonal coordinates point cloud data in accordance with a second formula for conversion from the polar coordinates to the orthogonal coordinates, and an environment map output part that outputs environment mapping data of the photographing range based on the orthogonal coordinates point cloud data obtained in the second coordinates conversion part.

The polar coordinates may be spherical coordinates including components of a vector radius, a polar angle, and an azimuth angle, the sub-region may be sectioned by the polar angle and the azimuth angle, and the farthest point searching part may search each sub-region for, as the farthest point data, the polar coordinates point cloud data having the largest value of the vector radius.

Also, the first coordinates conversion part may provide identification information identifying the sub-region based on values of the polar angle and the azimuth angle of the polar coordinates point cloud data, and the farthest point searching part may search each identification information for, as the farthest point data, the polar coordinates point cloud data that is farthest in distance from the three-dimensional sensor.

A second aspect of the present invention is a three-dimensional sensor control device onto which the environment map generation program of the first aspect of the present invention is installed. The three-dimensional sensor control device controls motion of the three-dimensional sensor.

(EFFECTS OF THE INVENTION)

The present invention can provide an environment map generation program and a three-dimensional sensor control device that can generate an environment map accurately and speedily even in an environment with a moving body.

BRIEF DESCRIPTION OF DRAWINGS

FIG. 1 is a block diagram showing an example of a computer hardware configuring a three-dimensional sensor control device of the present invention.
FIG. 2 is a functional block diagram showing functions of the three-dimensional sensor control device in FIG. 1.
FIG. 3 is a schematic view illustrating environment mapping data generated by an environment map generation program of the present invention.
FIG. 4 is a flow chart showing an example of a flow of environment map generation process realized by the environment map generation program in FIG. 2.
FIG. 5 is a schematic view illustrating polar coordinates.
FIG. 6 is a schematic view illustrating a sub-region and a process by a furthest point searching part.

DETAILED DESCRIPTION

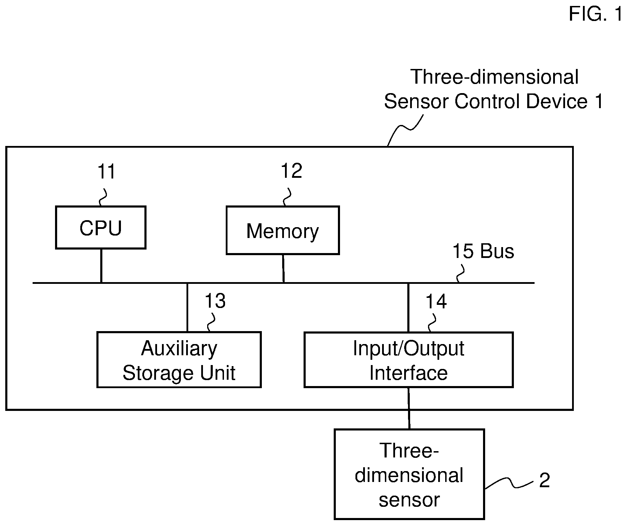

Hereinafter, some embodiments of the present invention will be described with reference to the accompanying drawings. FIG. 1 is a block diagram showing an example of a computer hardware configuring a three-dimensional sensor control device of the present invention. The three-dimensional sensor control device 1 is a computer that controls motions of a three-dimensional sensor 2 (controls acquisition of depth information of the three-dimensional sensor), and includes hardware such as a central processing unit (CPU) 11, a memory 12, an auxiliary storage unit 13, and an input/output interface 14 that are connected with each other via a bus 15.
The CPU 11 reads out programs stored in the auxiliary storage unit 13 etc. to the memory 12, executes the program, and executes processes that will be described below. The auxiliary storage unit 13 is a hard disk drive, a solid state drive, or the like, storing data that is to be used in the processes below. The input/output interface 14 receives input signals from the three-dimensional sensor 2, a mouse, a keyboard, a microphone, etc., and outputs signals to the three-dimensional sensor 2, a display, a speaker, etc. The input/output interface 14 also includes a communication interface and the like that performs transmission and reception of data with external computers. Unlimited examples of the input/output interface 14 includes, regardless of wired or wireless, a port of universal serial bus (USB) specification, HDMI (registered trademark) specification, local area network (LAN) specification, etc., and a communication device such as Bluetooth (registered trademark) specification and wireless LAN specification.
The computer configuring the three-dimensional sensor control device 1 may be a general purpose personal computer (PC) or may be a device into which specialized hardware is installed. Also, a part or all of functions of the three-dimensional sensor control device 1, which will be described below, may be realized by specialized integrated circuits built for specific use, such as a hardware circuit, an application specific integrated circuit (ASIC), and a field programmable gate array (FPGA). Also, the number of computers that execute the program is not specifically limited in the present embodiment. For example, the three-dimensional sensor control device 1 may execute processes cooperating with external computers.
The three-dimensional sensor 2 is a sensor that can measure a three-dimensional position of an object and acquires point cloud data, which is a set of points indicating positions of detected points on a surface of the object. Unlimited examples of the three-dimensional sensor 2 include an active stereo camera, a passive stereo camera, a three-dimensional light detection and ranging (LiDAR) sensor, and a time of flight (ToF) camera. The point cloud data acquired by the three-dimensional sensor 2 is orthogonal coordinates point cloud data represented in three-dimensional orthogonal coordinates (x, y, z). A possible range of each component of the three-dimensional coordinates (x, y, z) depends on an angle of view or a detection distance range of the three-dimensional sensor 2. Unlimited examples of file formats of the point cloud data include Point Cloud Data (PCD) developed by Point Cloud Library (PCL), which is an open source library.

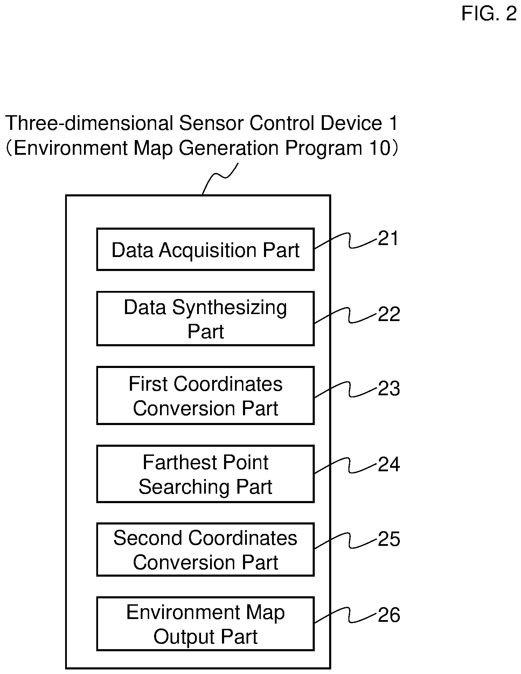

FIG. 2 is a functional block diagram showing functions of the three-dimensional sensor control device of FIG. 1. The functions of the three-dimensional sensor control device 1 shown in FIG. 2 are realized by installing an environment map generation program 10 of the present invention. The environment map generation program 10 may be distributed being stored in a storage medium that is readable by the computer or may be downloaded from a network such as the Internet.

The environment map generation program 10 is a program that causes the computer (i.e., the three-dimensional sensor control device 1) to function as a data acquisition part 21, a data synthesizing part 22, a first coordinates conversion part 23, a farthest point searching part 24, a second coordinates conversion part 25, and an environment map output part 26.

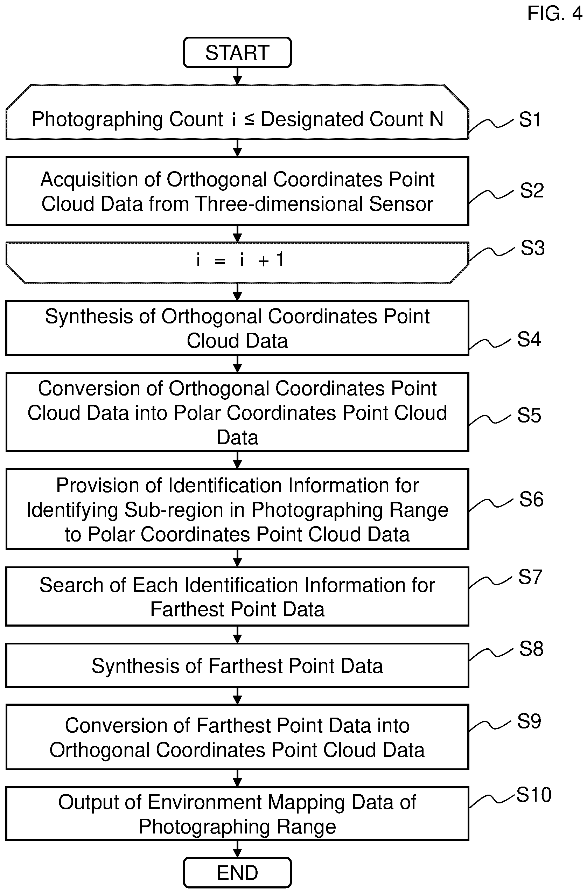

The data acquisition part 21 acquires orthogonal coordinates point cloud data of a plurality of photographing frames photographed by the three-dimensional sensor 2 with a fixed photographing range. The data synthesizing part 22 synthesizes the orthogonal coordinates point cloud data of the plurality of the photographing frames acquired by the data acquisition part 21 into a single array. The first coordinates conversion part 23 converts the orthogonal coordinates point cloud data into polar coordinates point cloud data in accordance with a first formula for conversion from orthogonal coordinates to polar coordinates. The farthest point searching part 24 searches each sub-region of the photographing range for, as farthest point data, the polar coordinates point cloud data that is farthest in distance from the three-dimensional sensor 2. The second coordinates conversion part 25 converts the farthest point data into the orthogonal coordinates point cloud data in accordance with a second formula for conversion from the polar coordinates to the orthogonal coordinates. The environment map output part 26 outputs environment mapping data of the photographing range based on the orthogonal coordinates point cloud data obtained in the second coordinates conversion part 25. Each function will be described in detail with reference to FIG. 4.

In addition to the functions shown in FIG. 2, the three-dimensional sensor control device 1 also includes functions such as motion control of the three-dimensional sensor 2 and execution of predetermined processes utilizing the environment mapping data. However, detailed descriptions of such functions are omitted.

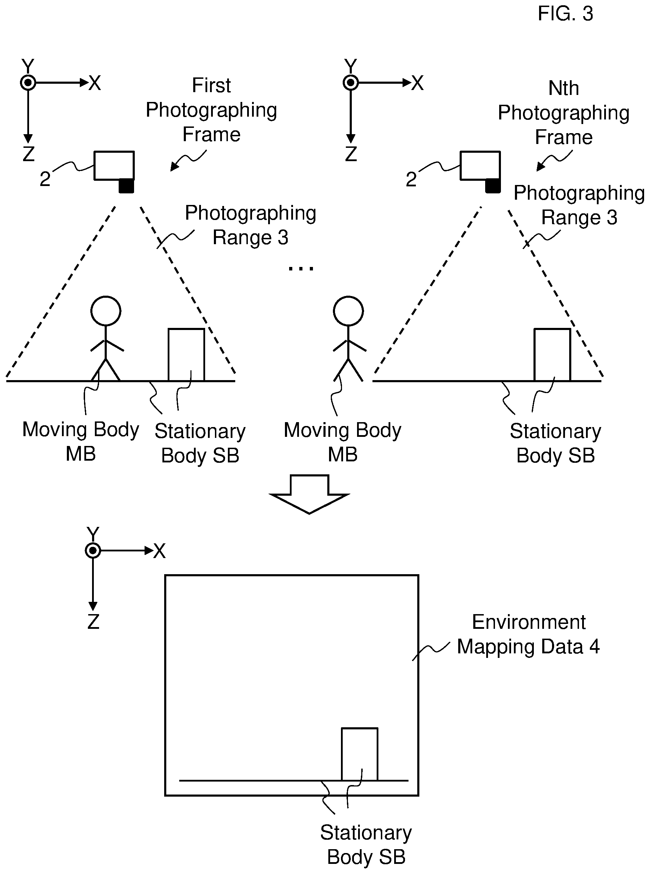

FIG. 3 is a schematic view illustrating the environment mapping data generated by the environment map generation program of the present invention. Although FIG. 3 shows a schematic view in a two-dimensional X-Z plain, the three-dimensional sensor control device 1 actually targets a three-dimensional X-Y-Z space. In an example shown in FIG. 3, the number of photographing frames photographed by the three-dimensional sensor 2 is N: from the first photographing frame to the Nth photographing frame in chronological order. A photographing range 3 of the first photographing frame includes a moving body MB such as a human and a stationary body SB such as a device, a table, and a floor. The moving body MB moves before taking the Nth photographing frame and thus the photographing range 3 of the Nth photographing frame includes only the stationary body SB.

Although the three-dimensional sensor 2 takes photographs from an upper part of the vertical direction facing downward in FIG. 3, a photographing direction of the three-dimensional sensor 2 is not limited thereto and may be upward from a lower part of the vertical direction, horizontal, or any other direction. Also, in addition to a ceiling, a floor, a wall, or a tripod, the three-dimensional sensor 2 may be installed on a vehicle, a robot, a drone, a computer, and so on that utilize environment mapping data 4.

An environment map generation process that is to be realized by the environment map generation program 10 of the present invention generates the environment mapping data 4 accurately and speedily even in an environment with the moving body MB. More specifically, the environment map generation process of the present embodiment speedily generates environment mapping data 4 with the only stationary body SB as a landmark, assuming that no moving body MB exists even in an environment where the moving body MB and the stationary body SB coexist.

FIG. 4 is a flow chart showing an example of a flow of the environment map generation process realized by the environment map generation program in FIG. 2. As shown in FIG. 4, the data acquisition part 21 of the three-dimensional sensor control device 1 compares a predetermined designated count N with a photographing count i of the three-dimensional sensor 2 for the environment map generation process, and iterates executing processes described below while the photographing count i is less than or equal to the designated count N (a step S1).

During the iteration process, the data acquisition part 21 acquires the orthogonal coordinates point cloud data from the three-dimensional sensor 2 via the input/output interface 14 (a step S2), counts up the photographing count i, i.e., substituting i for (i+1) (a step S3), and executes the judgment in the step S1. Through such the process, the data acquisition part 21 acquires the orthogonal coordinates point cloud data regarding the N photographing frames.

Next, the data synthesizing part 22 of the three-dimensional sensor control device 1 synthesizes the orthogonal coordinates point cloud data of the N photographing frames acquired by the data acquisition part 21 into a single array (a step S4). For example, if the number of the orthogonal coordinates point cloud data per photographing frame is D, the data synthesizing part 22 synthesizes the orthogonal coordinates point cloud data into an array with N×D components, taking each component as the single orthogonal coordinates point cloud data. Since the orthogonal coordinates point cloud data is represented by the three-dimensional orthogonal coordinates $(x, y, z)$, the array synthesized in the step S4 is a set of N×D orthogonal coordinates.

Next, the first coordinates conversion part 23 of the three-dimensional sensor control device 1 converts the orthogonal coordinates point cloud data, which is each of the components of the array synthesized in the step S4, into polar coordinates point cloud data in accordance with the first formula for conversion from the orthogonal coordinates to the polar coordinates (a step S5).

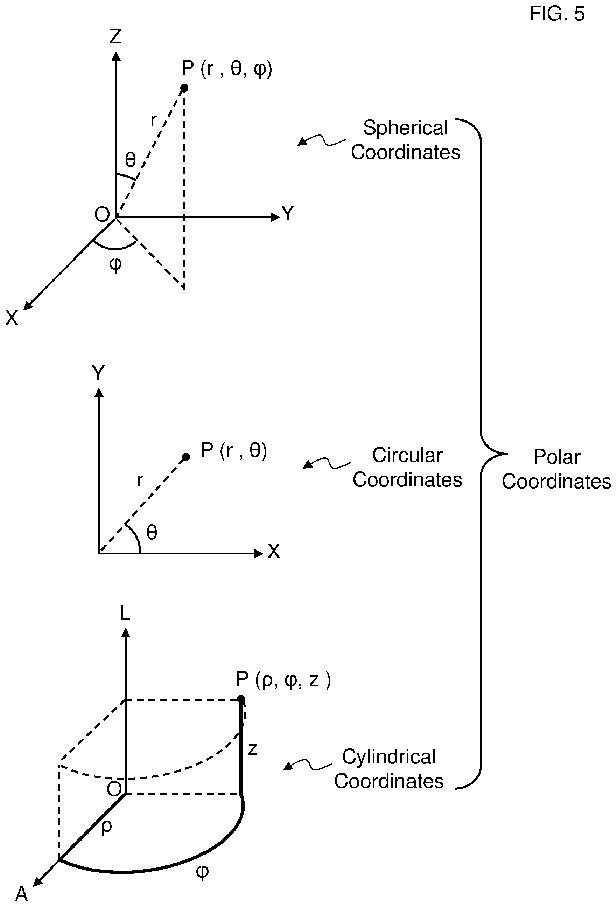

FIG. 5 is a schematic view illustrating the polar coordinates. The polar coordinates may be spherical coordinates in a three-dimensional space, circular coordinates in a two-dimensional space, or cylindrical coordinates in which Z axis is added to the circular coordinates. As shown in FIG. 5, the spherical coordinates $(r, \theta, \varphi)$ include components of a vector radius r, a polar angle (or a zenith angle) $\theta$, and an azimuth angle $\varphi$. The circular coordinates $(r, \theta)$ include components of the vector radius r and a deflection angle $\theta$. The cylindrical coordinates $(\rho, \varphi, z)$ include components of an axial distance (or radial distance) $\rho$, an azimuth angle $\varphi$, and an axial coordinate (or height) z. The descriptions hereinafter will take the spherical coordinates as the polar coordinates.

A possible range of each component of the spherical coordinates $(r, \theta, \varphi)$ depends on an angle of view or a detection distance range of the three-dimensional sensor 2. The formulas for conversion from the three-dimensional orthogonal coordinates (x, y, z) to the spherical coordinates $(r, \theta, \varphi)$ are shown in Formula (1) to Formula (3).

(Equation 1)

$$x = r\sin\theta\cos\phi \quad \cdots (1)$$

$$y = r\sin\theta\sin\phi \quad \cdots (2)$$

$$z = r\cos\theta \qquad \cdots (3)$$

Returning to the description of FIG. 4, the first coordinates conversion part 23 of the three-dimensional sensor control device 1 then provides, based on values of the polar angle $\theta$ and the azimuth angle $\varphi$ of the polar coordinates point cloud data, to each component of the array synthesized in the step S4 identification information identifying a sub-region of the photographing range 3 (a step S6).

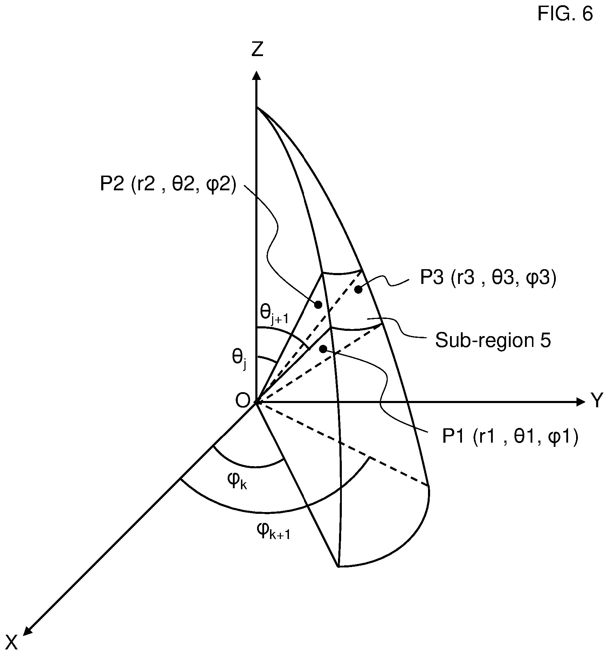

FIG. 6 is a schematic view illustrating a sub-region and a process by the furthest point searching part. A sub-region 5 is sectioned by the polar angle $\theta$ and the azimuth angle $\varphi$. In more detail, as shown in FIG. 6, the sub-region 5 is a three-dimensional region in a quadrangular pyramid shape defined by a sectioning interval $(\theta_{j+1} - \theta_j)$ (where $\theta_{j+1} > \theta_j$) of the polar angle $\theta$ and a sectioning interval $(\varphi_{j+1} - \varphi_j)$ (where $\varphi_{j+1} > \varphi_j$) of the azimuth angle $\varphi$. For example, if the sectioning interval of the polar angle $\theta$ and the sectioning interval of the azimuth angle $\varphi$ are both 1 degree, the sub-region 5 is sectioned into (first region) $0° < \theta \leq 1°$ and $0° < \varphi \leq 1°$, (second region) $0° < \theta \leq 1°$ and $1° < \varphi \leq 2°$, and so on. The identification information may be any information that can uniquely identify such regions and may be serial numbers or combinations of two numbers such as (1, 1), (1, 2), and so on.

Since the array synthesized in the step S4 includes the point cloud data of the photographing frames photographed at different times within the same photographing range 3, there are components having the same polar angle $\theta$ and the azimuth angle $\varphi$. That is, there are cases in which the same identification information is given to the plurality of the components of the array. Furthermore, the components of the array to which the same identification information is given may have the same value, or different values, for the vector radius r.

Returning to the description of FIG. 4, the farthest point searching part 24 of the three-dimensional sensor control device 1 checks the value of the vector radius r of each component for each identification information (i.e., the sub-region 5) given in the step S6, and search for the component having the largest value for the vector radius r (i.e., the polar coordinates point cloud data) as the farthest point data (a step S7). It is defined in the description of FIG. 2 that the farthest point data is the polar coordinates point cloud data that is the farthest in distance from the three-dimensional sensor 2. Thus, if a position of the three-dimensional sensor 2 is taken as an origin of the coordinates, the polar coordinates point cloud data with the largest value of the vector radius r is the farthest point data.

In an example shown in FIG. 6, the sub-region 5 defined by $\theta_j < \theta \leq \theta_{j+1}$ and $\varphi_j < \varphi \leq \varphi_{j+1}$ includes three polar coordinates point cloud data P1 (r1, $\theta$1, $\varphi$1), P2 (r2, $\theta$2, $\varphi$2), and P3 (r3, $\theta$3, $\varphi$3). For example, if r1 < r2 < r3, the farthest point searching part 24 takes P3 having the largest vector radius value as the farthest point.

If at least one photographing frame without the moving body MB can be obtained at each position in the photographing range 3, position information of the moving body MB is not included in the farthest point data searched by the farthest point searching part 24. This is because the vector radius r of the polar coordinates point cloud data regarding the position of the moving body MB such as a human is smaller than a value of the vector radius r of the polar coordinates point cloud data regarding the position of the stationary body SB such as a floor. Thus, by using only the farthest point data, the environment mapping data 4 can be generated assuming that no moving body MB exists.

Next, the data synthesizing part 22 of the three-dimensional sensor control device 1 synthesizes the farthest point data searched by the farthest point searching part 24 into a single array (a step S8). The array synthesized in the step S8 is a set of spherical coordinates in which the number of components is indefinite (approximately D).

Next, the second coordinates conversion part 25 of the three-dimensional sensor control device 1 converts the farthest point data (i.e., the polar coordinates point cloud data), which is each of the components of the array synthesized in the step S8, into orthogonal coordinates point cloud data in accordance with the second formula for conversion from the polar coordinates to the orthogonal coordinates (a step S9). The formulas for conversion from the spherical coordinates (r, θ, φ) to the three-dimensional orthogonal coordinates (x, y, z) are shown in Formula (4) to Formula (6).

(Equation 2)

$$r = \sqrt{x^2 + y^2 + z^2} \qquad \cdots (4)$$

$$\theta = arccos\left(z/\sqrt{x^2 + y^2 + z^2}\right) \qquad \cdots (5)$$

$$\phi = sgn(y)arccos\left(x/\sqrt{x^2 + y^2}\right) \qquad \cdots (6)$$

$$sgn(y) = \begin{cases} 1 & (y \geqq 0) \\ -1 & (y < 0) \end{cases}$$

Next, the environment map output part 26 of the three-dimensional sensor control device 1 generates the environment mapping data 4 using only the orthogonal coordinates point cloud data converted from the farthest point data in the step S9. Then, the environment map output part 26 outputs the environment mapping data 4 to an output device such as a display or to an external computer via the input/output interface 14 (a step S10). The output environment mapping data 4 includes no position information of the moving body MB but includes the position information of the stationary body SB only.

As above, the three-dimensional sensor control device 1 converts the orthogonal coordinates point cloud data into the polar coordinates point cloud data and searches each sub-region 5 for, as the farthest point data, the polar coordinates point cloud data that is farthest in distance from the three-dimensional sensor 2. This makes it possible to generate the environment mapping data 4 with only the stationary body SB as a landmark, assuming that no moving body MB exists even in an environment where the moving body MB and the stationary body SB coexist.

It is possible, for common still images, to eliminate the moving body MB by using a background difference method. However, in the case of the point cloud data acquired by the three-dimensional sensor 2, there are variations even if images are taken in the same environment, and thus it is impossible to simply extract differences as in the background difference method. So, the three-dimensional sensor control device 1 distinguishes between the moving body MB and the stationary body SB based on distance information in the polar coordinates. With such the method, matching between the point cloud data (i.e., point-cloud registration) is unnecessary, and high-speed processing can be achieved. Furthermore, errors such as recognizing the moving body MB as a landmark and generating the incorrect environment mapping data 4 can be prevented.

In the present embodiment, the polar coordinates are the spherical coordinates including components of the vector radius r, the polar angle θ, and the azimuth angle φ. Also, the three-dimensional sensor control device 1 searches each sub-region 5 sectioned by the polar angle θ and the azimuth angle φ for the polar coordinates point cloud data with the largest value of the vector radius r as the farthest point data. Detectable distance, vertical angle of view, and horizontal angle of view of the three-dimensional sensor 2 correspond to the possible ranges of the vector radius r, polar angle θ, and azimuth angle φ in the spherical coordinates, respectively. That is, since the possible range of each component of the spherical coordinates (r, θ, φ) can be predicted from the performance of the three-dimensional sensor 2, it is reasonable to use the spherical coordinates. Furthermore, in the case of spherical coordinates, it is easy to intuitively understand a reason why the moving body MB can be eliminated by the present invention.

Also, the three-dimensional sensor control device 1 provides the identification information identifying the sub-region 5 based on values of the polar angle θ and the azimuth angle φ of the polar coordinates point cloud data, and searches each identification information for the farthest point data. This allows the search process for the farthest point data to be executed at high speed.

Although the orthogonal coordinates point cloud data is represented by the three-dimensional orthogonal coordinates (x, y, z) in the above description, the orthogonal coordinates point cloud data may be represented by two-dimensional orthogonal coordinates (x, y). In such the case, the three-dimensional sensor control device 1 takes the circular coordinates (r, θ) shown in FIG. 5 as the polar coordinates and uses a known formula for conversion from the two-dimensional orthogonal coordinates to the circular coordinates and a known formula for conversion from the circular coordinates to the two-dimensional orthogonal coordinates. Then, the three-dimensional sensor control device 1 searches each triangular sub-region 5, which is sectioned by the deflection angle θ, for the polar coordinates point cloud data having the largest value of the vector radius r as the farthest point data. For example, in a case of generating the environment mapping data 4 by installing the three-dimensional sensor 2 on a robot cleaner that has a small vertical dimension and only moves in horizontal directions, two-dimensional information may be sufficient.

Also, the polar coordinates may be the cylindrical coordinates $(\rho, \varphi, z)$ shown in FIG. 5. In such the case, the three-dimensional sensor control device 1 uses a known formula for conversion from the three-dimensional orthogonal coordinates to the cylindrical coordinates and a known formula for conversion from the cylindrical coordinates to the three-dimensional orthogonal coordinates. Then, the three-dimensional sensor control device 1 searches each triangular sub-region 5, which is sectioned by the axial coordinate z and the azimuth angle $\varphi$, for the polar coordinates point cloud data having the largest value of the axial distance $\rho$ as the farthest point data. For example, it may be reasonable to use the cylindrical coordinates in a case of generating the environment mapping data 4 by installing the three-dimensional sensor 2 on a cylindrical coordinates robot including at least one joint for rotary motion and one joint for linear motion.

Although the preferable embodiments for the environment map generation program and the three-dimensional sensor control device etc. according to the present invention have been described above referring to the attached drawings, the technical scope of the present invention is not limited to such examples. It is obvious that persons skilled in the art can think out various examples of changes or modifications within the scope of the technical idea disclosed in the claims, and it will be understood that they naturally belong to the technical scope of the present invention.

(DESCRIPTION OF NOTATIONS)

1     three-dimensional sensor control device
2     three-dimensional sensor
3     photographing range
4     environment mapping data
5     sub-region
10    environment map generation program
21    data acquisition part
22    data synthesizing part
23    first coordinates conversion part
24    farthest point searching part
25    second coordinates conversion part
26    environment map output part

**Claims**

1. An environment map generation program that causes a computer to function as

   a data acquisition part that acquires orthogonal coordinates point cloud data of a plurality of photographing frames photographed by at least one three-dimensional sensor with a fixed photographing range;
   a first coordinates conversion part that converts the orthogonal coordinates point cloud data into polar coordinates point cloud data in accordance with a first formula for conversion from orthogonal coordinates to polar coordinates;
   a farthest point searching part that searches each sub-region of the photographing range for, as farthest point data, the polar coordinates point cloud data that is farthest in distance from the three-dimensional sensor;
   a second coordinates conversion part that converts the farthest point data into the orthogonal coordinates point cloud data in accordance with a second formula for conversion from the polar coordinates to the orthogonal coordinates; and
   an environment map output part that outputs environment mapping data of the photographing range based on the orthogonal coordinates point cloud data obtained in the second coordinates conversion part.

2. The environment map generation program according to claim 1, wherein

   the polar coordinates are spherical coordinates including components of a vector radius, a polar angle, and an azimuth angle, and the sub-region is sectioned by the polar angle and the azimuth angle; and

the farthest point searching part searches each sub-region for, as the farthest point data, the polar coordinates point cloud data having the largest value of the vector radius.

3. The environment map generation program according to claim 2, wherein

the first coordinates conversion part provides identification information identifying the sub-region based on values of the polar angle and the azimuth angle of the polar coordinates point cloud data; and
the farthest point searching part searches each identification information for, as the farthest point data, the polar coordinates point cloud data that is farthest in distance from the three-dimensional sensor.

4. A three-dimensional sensor control device onto which the environment map generation program according to any one of claims 1 to 3 is installed, wherein the three-dimensional sensor control device controls motion of the three-dimensional sensor.

FIG. 1

Three-dimensional
Sensor Control Device 1

11

CPU

12

Memory

15 Bus

13

Auxiliary
Storage Unit

14

Input/Output
Interface

Three-
dimensional
sensor

2

FIG. 2

Three-dimensional Sensor Control Device 1
(Environment Map Generation Program 10)

| Data Acquisition Part | 21 |
| Data Synthesizing Part | 22 |
| First Coordinates Conversion Part | 23 |
| Farthest Point Searching Part | 24 |
| Second Coordinates Conversion Part | 25 |
| Environment Map Output Part | 26 |

FIG. 3

Y ⊙ →X

Z

2 ⌐ First
Photographing
Frame

Photographing
Range 3

Y ⊙ →X

Z

2 ⌐ Nth
Photographing
Frame

Photographing
Range 3

...

Moving Body
MB

Stationary
Body SB

Moving Body
MB

Stationary
Body SB

Y ⊙ →X

Z

Environment
Mapping Data 4

Stationary
Body SB

FIG. 4

```
┌─────────────┐
│    START    │
└─────────────┘
       │
       ▼
┌──────────────────────────────────────────┐
│ Photographing Count i ≤ Designated Count N │   ～ S1
└──────────────────────────────────────────┘
       │
       ▼
┌──────────────────────────────────────────┐
│ Acquisition of Orthogonal Coordinates Point │
│ Cloud Data from Three-dimensional Sensor    │   ～ S2
└──────────────────────────────────────────┘
       │
       ▼
┌──────────────────────────────────────────┐
│              i  =  i  + 1                  │   ～ S3
└──────────────────────────────────────────┘
       │
       ▼
┌──────────────────────────────────────────┐
│ Synthesis of Orthogonal Coordinates Point  │
│              Cloud Data                     │   ～ S4
└──────────────────────────────────────────┘
       │
       ▼
┌──────────────────────────────────────────┐
│ Conversion of Orthogonal Coordinates Point │
│ Cloud Data into Polar Coordinates Point Cloud │   ～ S5
│                  Data                       │
└──────────────────────────────────────────┘
       │
       ▼
┌──────────────────────────────────────────┐
│ Provision of Identification Information for │
│ Identifying Sub-region in Photographing Range │   ～ S6
│ to Polar Coordinates Point Cloud Data       │
└──────────────────────────────────────────┘
       │
       ▼
┌──────────────────────────────────────────┐
│ Search of Each Identification Information for │   ～ S7
│          Farthest Point Data                │
└──────────────────────────────────────────┘
       │
       ▼
┌──────────────────────────────────────────┐
│      Synthesis of Farthest Point Data       │   ～ S8
└──────────────────────────────────────────┘
       │
       ▼
┌──────────────────────────────────────────┐
│ Conversion of Farthest Point Data into      │   ～ S9
│ Orthogonal Coordinates Point Cloud Data     │
└──────────────────────────────────────────┘
       │
       ▼
┌──────────────────────────────────────────┐
│ Output of Environment Mapping Data of       │   ～ S10
│          Photographing Range                │
└──────────────────────────────────────────┘
       │
       ▼
┌─────────────┐
│     END     │
└─────────────┘
```

FIG. 5

Z

P (r , θ, φ)

r

θ

O Y

φ

X

Spherical
Coordinates

Y

P (r , θ)

r

θ

X

Circular
Coordinates

Polar
Coordinates

L

P (ρ, φ, z )

z

O

ρ

A

φ

Cylindrical
Coordinates

FIG. 6

Europäisches
Patentamt
European
Patent Office
Office européen
des brevets

**EUROPEAN SEARCH REPORT**

Application Number

EP 25 15 2291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/134717 A1 (XU HAO [US]) 4 May 2023 (2023-05-04) * paragraph [0110]; figure 7B * ----- | 1-4 | INV. G01S7/48 G01S17/89 G01S17/931 |
| A | KR 2021 0022016 A (NAVER LABS CORP [KR]) 2 March 2021 (2021-03-02) * the whole document * ----- | 1-4 | G06T3/00 G06T7/73 G06T7/00 G06T17/05 |
| A | ZHANG ZHENYAO ET AL: "Automatic Background Construction and Object Detection Based on Roadside LiDAR", IEEE TRANSACTIONS ON INTELLIGENT TRANSPORTATION SYSTEMS, IEEE, PISCATAWAY, NJ, USA, vol. 21, no. 10, 1 October 2020 (2020-10-01), pages 4086-4097, XP011812315, ISSN: 1524-9050, DOI: 10.1109/TITS.2019.2936498 [retrieved on 2020-10-01] * paragraph [0IV.] * ----- | 1-4 | |
| A | DE 10 2022 204515 A1 (BOSCH GMBH ROBERT [DE]) 9 November 2023 (2023-11-09) * paragraph [0053] - paragraph [0066]; figure 3 * ----- | 1-4 | TECHNICAL FIELDS SEARCHED (IPC) G01S G06T |
| A | CN 105 867 373 A (UNIV CHONGQING) 17 August 2016 (2016-08-17) * the whole document * ----- | 1-4 | |

The present search report has been drawn up for all claims

| Place of search | Date of completion of the search | Examiner |
|---|---|---|
| Munich | 12 June 2025 | Kaleve, Abraham |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

2

## ANNEX TO THE EUROPEAN SEARCH REPORT
## ON EUROPEAN PATENT APPLICATION NO.

EP 25 15 2291

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2025

| Patent document cited in search report | Publication date | Patent family member(s) | Publication date |
|---|---|---|---|
| US 2023134717 A1 | 04-05-2023 | NONE | |
| KR 20210022016 A | 02-03-2021 | NONE | |
| DE 102022204515 A1 | 09-11-2023 | CN 119183553 A | 24-12-2024 |
| | | DE 102022204515 A1 | 09-11-2023 |
| | | EP 4523055 A1 | 19-03-2025 |
| | | WO 2023217603 A1 | 16-11-2023 |
| CN 105867373 A | 17-08-2016 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022134119 A